# EUROPEAN PATENT APPLICATION

(11) **EP 2 103 847 A2**
(43) Date of publication of application: **23.09.2009**
(21) Application number: 08022041.1
(22) Date of filing: 18.12.2008
(51) Int. Cl.: F16H 61/662

(54) **Control device for continuously variable transmission and control method thereof**

(30) Priority: 17.03.2008 JP 2008068117
(71) Applicant: JATCO Ltd, Fuji-shi, Shizuoka 417-8585 (JP)
(72) Inventor: Shinohara, Fumito, Fuji-shi Shizuoka 417-8585 (JP); Nam, Juhyun, Puchon-si Kyonggi-do, 422-760 (KR); Doihara, Katsumi, Fuji-shi Shizuoka 417-8585 (JP); Sasaki, Hideaki, Fuji-shi Shizuoka 417-8585 (JP); Asai, Norio, Fuji-shi Shizuoka 417-8585 (JP); Tanaka, Hiroyasu, Fuji-shi Shizuoka 417-8585 (JP); Wakayama, Hideshi, Fuji-shi Shizuoka 417-8585 (JP); Kaneda, Takeshi, Fuji-shi Shizuoka 417-8585 (JP); Aoki, Daisuke, Fuji-shi Shizuoka 417-8585 (JP)
(74) Representative: Hager, Thomas Johannes

(57) **Abstract**

When a shift lever is shifted from an N range to a D range and a predetermined learning condition is established, a learning timer tm_pulse up to a point at which a pulse signal is detected by a primary pulley rotation speed sensor is calculated, and when a deviation between the learning timer tm_pulse and a reference correction amount ΔP_offset is larger than a predetermined threshold Δt_pulse_dif, a learned correction amount P_offset is updated.

## Description

### FIELD OF THE INVENTION

This invention relates to a control device for a continuously variable transmission.

### BACKGROUND OF THE INVENTION

In a conventional continuously variable transmission, when a driver switches a shift lever from an N range to a D range (or an R range) during start-up, the resulting motion is transmitted to a manual valve by a physical interlocking mechanism, and by displacing the manual valve to a position in which a clutch source pressure communicates with a piston oil chamber of a forward clutch (or a position in which the clutch source pressure communicates with a piston oil chamber of a reverse clutch (brake)), the forward clutch (or reverse clutch) is engaged such that engine torque is transmitted to the continuously variable transmission.

When the shift lever is switched from the N range to the D range (or the R range), engagement of the forward clutch (or reverse clutch) is completed in three main phases, namely a pre-charging phase, an engagement progression phase, and a final engagement phase. In the pre-charging phase, a hydraulic circuit is charged and an inactive stroke part of the clutch is terminated in accordance with a high oil pressure command value. In the engagement progression phase, the oil pressure command value is temporarily reduced to a predetermined value following the pre-charging phase, and then raised at a predetermined increase rate. In the final engagement phase, the oil pressure command value is raised in a short time period to a maximum value of the clutch engagement period following the engagement progression phase.

When the clutch oil pressure is subjected to open control corresponding to the oil pressure command value in the respective phases described above and a reference value (nominal value) of the oil pressure command value, set as standard and stored in a ROM of an ATCU at the time of shipping, is used as is, problems such as an engagement delay, or conversely engagement shock caused when engagement is performed too quickly, arise due to temporal variation in the clutch, product variation, a working oil temperature, and so on. The open control is a control to increase the clutch oil pressure by a predetermined increase rate.

An example of a solution to these problems is described in JPH06-265004A. According to JPH06-265004A, the time required for an input side rotation speed (turbine rotation speed) of the clutch to reach a predetermined rotation speed (0rpm, i.e. when the vehicle becomes stationary) after switching from the N range to the D range (R range) is measured. When the time required for engagement is longer than a reference time, learning correction is implemented to increase the oil pressure command value relative to the nominal value by a predetermined amount. When the time required for engagement is shorter than the reference time, on the other hand, learning correction is implemented to reduce the oil pressure command value relative to the nominal value by a predetermined amount.

### SUMMARY OF THE INVENTION

However, in the invention described above, a sensor for detecting the input side rotation speed of the clutch is required. Hence, when this sensor is not provided, the learning correction cannot be realized.

This invention has been invented to solve the problems described above, and it is an object thereof to enable learning correction in order to suppress a delay in clutch engagement or engagement shock caused by rapid clutch engagement, even when a sensor for detecting the input side rotation speed of the clutch is not provided.

This present invention provides a control device for a continuously variable transmission, which controls a continuously variable transmission having a belt that is looped around a primary pulley and a secondary pulley and has a contact radius with the pulleys which varies in accordance with a groove width. The control device comprises an inhibitor switch which outputs a signal corresponding to a shift lever operating position, an oil pressure control means which controls an oil pressure supplied to a forward clutch or a reverse clutch interposed between the primary pulley and an engine on the basis of the signal output by the inhibitor switch and an operating condition of a vehicle, a primary pulley rotation speed detection means which detects a rotation speed of the primary pulley, a time calculation means which, when the shift lever operating position is determined to have been switched from a non-travel position to a travel position on the basis of the signal output by the inhibitor switch, calculates an elapsed time from the determination to output of a pulse signal by the primary pulley rotation speed detection means, an oil pressure correction amount learning means which, when the shift lever operating position is determined to have been switched from the non-travel position to the travel position on the basis of the signal output by the inhibitor switch, learns an oil pressure correction amount on the basis of the elapsed time, and an oil pressure correction means which, when the shift lever operating position is switched from the non-travel position to the travel position, corrects the oil pressure supplied to the forward clutch or the reverse clutch through open control by the oil pressure correction amount. The oil pressure control means supplies the oil pressure corrected by the oil pressure correction means to the forward clutch or the reverse clutch when the shift lever operating position is switched from the non-travel position to the travel position.

According to this invention, an oil pressure correction value can be learned even when a sensor for detecting the input side rotation speed of the clutch is not provided, and therefore, when the forward clutch or the reverse clutch is engaged, delays in clutch engagement or engagement shock caused by rapid engagement can be suppressed.

The details as well as other features and advantages of this invention are set forth in the remainder of the specification and are shown in the accompanying drawings.

### BRIEF DESCRIPTION OF THE DRAWINGS

FIG. 1 is a schematic diagram of a V belt continuously variable transmission according to a first embodiment of this invention.

FIG. 2 is a flowchart illustrating clutch oil pressure control according to the first embodiment of this invention.

FIG. 3 is a flowchart illustrating a method of setting a learned correction amount according to the first embodiment of this invention.

FIG. 4 is a time chart showing variation in an actual clutch oil pressure when this invention is not used.

FIG. 5 is a time chart showing variation in the actual clutch oil pressure when this invention is used.

FIG: 6 is a flowchart illustrating a method of setting a learned correction amount according to a second embodiment of this invention.

FIG. 7 is a map for calculating a reference correction amount according to the second embodiment of this invention.

### DESCRIPTION OF THE PREFERRED EMBODIMENTS

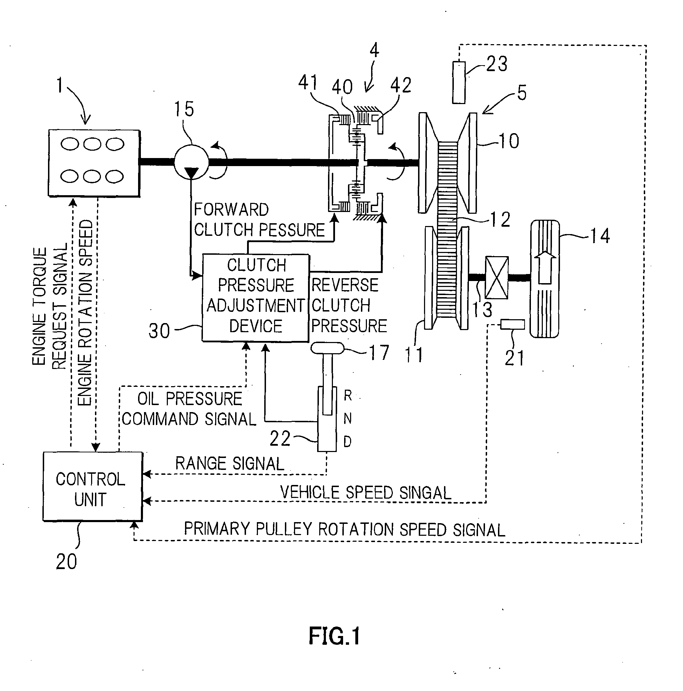

A power train according to a first embodiment of this invention will be described below using the schematic diagram shown in FIG. 1.

In FIG. 1, the power train is mainly constituted by a forward-reverse switching mechanism 4 connected to an engine 1, and a continuously variable transmission 5 connected to an output shaft of the forward-reverse switching mechanism 4. The continuously variable transmission 5 comprises an input shaft side primary pulley 10 and a secondary pulley 11 connected to an output shaft 13, which together form a pair of variable pulleys, and the pair of variable pulleys 10, 11 are connected by a V belt (belt) 12. The output shaft 13 is connected to a drive shaft 14 via an idler gear and a differential gear. Further, start-up elements (not shown) such as a torque converter are interposed between an input side of the forward-reverse switching mechanism 4 and the engine 1.

The forward-reverse switching mechanism 4 is constituted by a planetary gear 40 that switches a power transmission path between the engine 1 side and the primary pulley 10, a forward clutch 41, and a reverse clutch 42. During forward advancement of a vehicle, the forward clutch 41 is engaged, and when the vehicle reverses, the reverse clutch 42 is engaged. In a neutral position (neutral or parking), both the forward clutch 41 and the reverse clutch 42 are disengaged.

The engagement state of the forward clutch 41 and reverse clutch 42 is controlled by a clutch pressure adjustment device (oil pressure control unit) 30 that supplies working oil to the forward clutch 41 and reverse clutch 42 at a predetermined oil pressure in accordance with a command from a control unit 20.

The clutch pressure adjustment device 30 adjusts the oil pressure supplied to the forward clutch 41 and reverse clutch 42 using an oil pressure from a hydraulic pump 15 as a source pressure. Further, the hydraulic pump 15 is connected to the input side of the forward-reverse switching mechanism 4 and so on, and driven by the engine 1.

The control unit 20 determines an oil pressure command value on the basis of operating conditions and driving operations such as a vehicle speed signal from a vehicle speed sensor 21, a range signal from an inhibitor switch 22 that operates in accordance with a shift lever 17, an engine rotation speed signal from the engine 1 (or an engine control device), and a rotation speed signal relating to the primary pulley 10 from a primary pulley rotation speed sensor (primary pulley rotation speed detection unit) 23, and issues a corresponding command to the clutch pressure adjustment device (oil pressure control unit) 30. It should be noted that the inhibitor switch 22 selects one of forward advancement (D range), the neutral position = neutral (N range), and reverse (R range), for example.

The clutch pressure adjustment device 30 engages or disengages the forward clutch 41 and reverse clutch 42 by adjusting the oil pressure supplied to the forward clutch 41 and reverse clutch 42 in accordance with the oil pressure command value.

Engagement of the forward clutch 41 and reverse clutch 42 is performed exclusively such that during forward advancement (range signal = D range), a forward clutch pressure is supplied to engage the forward clutch 41 while a reverse clutch pressure is connected to a drain to disengage the reverse clutch 42, and during reversing (range signal = R range), the forward clutch pressure is connected to the drain to disengage the forward clutch 41, while the reverse clutch pressure is supplied to engage the reverse clutch 42. Further, in the neutral position (range signal = N range), the forward clutch pressure and the reverse clutch pressure are connected to the drain to disengage both the forward clutch 41 and the reverse clutch 42.

It should be noted that a speed ratio of the continuously variable transmission 5 and a contact frictional force of the V belt 12 are controlled by a hydraulic control unit (not shown) that operates in accordance with a command from the control unit 20.

The primary pulley rotation speed sensor 23 that detects the rotation speed of the primary pulley 10 faces an output gear (not shown) attached to the primary pulley 10. Teeth are formed at equal intervals on an outer periphery of the output gear. Therefore, an output waveform detected by the primary pulley rotation speed sensor 23 takes a constant-pitch pulse form at a constant vehicle speed. In other words, the primary pulley rotation speed sensor 23 is constituted by a pulse sensor that outputs a pulse signal which is synchronous with the rotation of the primary pulley 10.

When the position of the shift lever 17 is in the N range and the vehicle is stationary, rotation from the engine 1 is not transmitted to the primary pulley 10, and therefore the primary pulley 10 does not rotate. Accordingly, a pulse signal is not output by the primary pulley rotation speed sensor 23. However, when the position of the shift lever 17 shifts from the N range to the D range, for example, the forward clutch pressure is supplied to engage the forward clutch 41 and torque is gradually transmitted from the engine 1 to the output side of the forward clutch 41. The torque is then transmitted to the primary pulley 10, and as a result, the primary pulley 10 rotates. Hence, a pulse signal is output by the primary pulley rotation speed sensor 23 to the control unit 20.

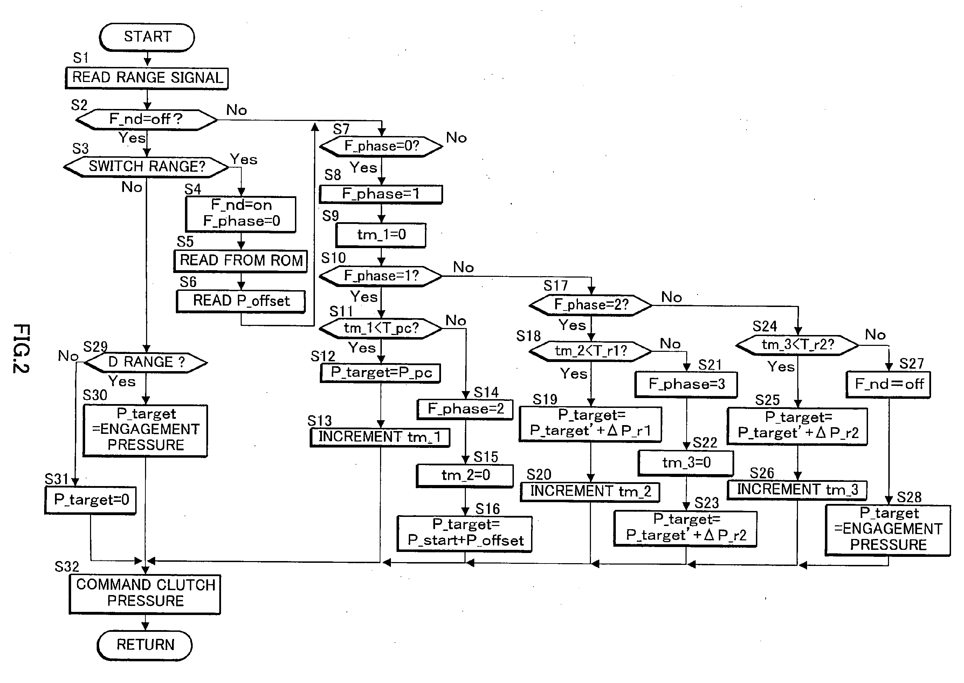

Next, clutch oil pressure control performed by the clutch pressure adjustment device 30 will be described using the flowchart shown in FIG. 2.

In a step S1, a current range signal is read by the inhibitor switch 22.

In a step S2, a determination is made as to whether or not a flag (to be referred to hereafter as an ND switch flag) F_nd, which indicates whether the shift lever 17 has been switched from the N range to the D range or not, is off. When the ND switch flag F_nd is off, the routine advances to a step S3, and when the ND switch flag F_nd is on, the routine advances to a step S7. It should be noted that in the first determination of this control, the ND switch flag F_nd is off, and therefore the routine advances to the step S3.

In the step S3, the range signal of the previous control is read and compared to the current range signal read in the step S1. A determination is then made as to whether or not the shift lever 17 has been switched from the N range to the D range. When the shift lever 17 has been switched from the N range to the D range, the routine advances to a step S4, and when the shift lever 17 has not been switched from the N range to the D range, the routine advances to a step S29.

In the step S4, the ND switch flag F_nd is switched on. Further, a phase flag F_phase is set at zero, indicating an initialization phase.

In a step S5, nominal values of a pre-charging pressure P_pc, a pre-charging time T_pc, an initial engagement pressure P_start, a first ramp increase rate ΔP_r1, a first ramp time T_r1, a second ramp increase rate ΔP_r2, and a second ramp time T_r2 are read from the ROM of the control unit 20.

In a step S6, a learned correction amount P_offset is read from the control unit 20. The learned correction amount P_offset is stored in a storage area of a non-volatile rewritable memory such as an EEPROM, for example. When a correction amount has not been learned, the learned correction amount P_offset is set at zero. A method of setting the learned correction amount P_offset will be described below.

When the ND switch flag F_nd is on in the step S2, a determination is made in the step S7 as to whether or not a current phase is the initialization phase. Here, a determination is made as to whether or not the phase flag F_phase is at zero, indicating the initialization phase. When the phase flag F_phase is at zero, the routine advances to a step S8, and when the phase flag F_phase is not at zero, the routine advances to a step S10.

In the step S8, the ND switch flag F_nd is on and the nominal values have been read, and therefore the phase flag F_phase is set at 1 to indicate a shift to a pre-charging phase.

In a step S9, a first timer tm_1 for determining an elapsed time of the pre-charging phase is initialized to zero.

In the step S10, a determination is made as to whether or not the current phase is the pre-charging phase. Here, a determination is made as to whether or not the phase flag F_phase is at 1, indicating the pre-charging phase. When the phase flag F_phase is at 1, the routine advances to a step S 11, and when the phase flag F_phase is not at 1, the routine advances to a step S 17.

In the step S 11, a determination is made as to whether or not the first timer tm_1 has reached the pre-charging time T_pc read in the step S5. When the first timer tm_1 has not reached the pre-charging time T_pc, the routine advances to a step S12, and when the timer tm_1 has reached the pre-charging time T_pc, the routine advances to a step S14.

In the step S12, the pre-charging pressure P_pc read in the step S5 is set as a clutch oil pressure command value P_target. The pre-charging pressure P_pc is a maximum pressure of the clutch oil pressure command value, by which the inactive stroke of the forward clutch 41 can be reduced quickly.

In a step S 13, the first timer tm_1 is incremented.

When the first timer tm_1 has reached the pre-charging time T_pc in the step S11, the pre-charging phase is complete. Hence, the phase flag F_phase is set at 2, indicating an engagement progression phase, in the step S14.

In a step S15, a second timer tm_2 for determining an elapsed time of the engagement progression phase is initialized to zero.

In a step S16, the clutch oil pressure command value P_target is set at the total value of the initial engagement value P_start read in the step S5 and the learned correction amount P_offset read in the step S6.

When the sign of the learned correction amount P_offset read in the step S6 is negative, the clutch oil pressure command value P_target is set at a smaller value than the initial engagement value P_start.

The learned correction amount P_offset is stored using a method to be described in detail below, and by adding (subtracting) the learned correction amount P_offset to (from) the initial engagement value P_start, clutch engagement delays, engagement shock, and so on caused by temporal deterioration of the clutch, product variation, the working oil temperature, and so on can be suppressed.

When it is determined in the step S10 that the phase flag F_phase is not at 1, a determination is made in the step S 17. as to whether or not the current phase is the engagement progression phase. Here, a determination is made as to whether or not the phase flag F_phase is at 2, indicating the engagement progression phase. When the phase flag F_phase is at 2, the routine advances to a step S18, and when the phase flag F_phase is not at 2, the routine advances to a step S24.

In the step S 18, a determination is made as to whether or not the second timer tm_2 has reached the first ramp time T_r1 read in the step S5. When the second timer tm_2 has not reached the first ramp time T_r1, the routine advances to a step S19, and when the second timer tm_2 has reached the first ramp time T_r1, the routine advances to a step S21.

In the step S19, the clutch oil pressure command value P_target is calculated by adding the first ramp increase rate ΔPr_1 read in the step S5 to a clutch oil pressure command value P_target' of the previous control.

When it is determined here that the current phase is the engagement progression phase, the clutch oil pressure command value P_target is increased at the first ramp increase rate ΔP_r1 in each control cycle from either the initial engagement value P_start or the value obtained by adding (subtracting) the learned correction amount P_offset to (from) the initial engagement value P_start.

In a step S20, the second timer tm_2 is incremented.

When the second timer tm_2 has reached the first ramp time T_r1 in the step S18, the engagement progression phase is complete. Hence, in the step S21, the phase flag F_phase is set at 3, indicating the final engagement phase.

In a step S22, a third timer tm_3 for determining an elapsed time of the final engagement phase is initialized to zero.

In a step S23, the clutch oil pressure command value P_target is calculated by adding the second ramp increase rate ΔP_r2 to the clutch oil pressure command value P_target' of the previous control.

At this point, the forward clutch 41 has already begun torque transmission, and therefore the clutch command oil pressure P_target is increased at the second ramp increase rate ΔP_r2, which is larger than the first ramp increase rate ΔP_r1, in order to complete engagement of the forward clutch 41 quickly.

When it is determined that the phase flag F_phase is not at 2 in the step S 17, a determination is made in the step S24 as to whether or not the third timer tm_3 has reached the second ramp time T_r2 read in the step S5. When the third timer tm_3 has not reached the second ramp time T_r2, the routine advances to a step S25, and when the third timer tm_3 has reached the second ramp time T_r2, the routine advances to a step S27.

In the step S25, the clutch oil pressure command value P_target is calculated by adding the second ramp increase rate ΔP_r2 to the clutch oil pressure command value P_target' of the previous control.

In a step S26, the third timer tm_3 is incremented.

When it is determined that the third timer tm_3 has reached the second ramp time T_r2 in the step S24, it is determined in the step S27 that engagement of the forward clutch 41 is complete, and therefore the ND switch flag F_nd is switched off.

In a step S28, the clutch oil pressure command value P_target is set at a normal clutch engagement pressure.

When it is determined in the step S3 that the shift lever 17 has not been switched from the N range to the D range, a determination is made in the step S29 as to whether or not the shift lever 17 is in the D range. When the shift lever 17 is in the D range, the routine advances to a step S30, and when the shift lever 17 is in the N range, the routine advances to a step S31.

In the step S30, the clutch oil pressure command value P_target is set at the normal clutch engagement pressure.

In the step S31, the clutch oil pressure command value P_target is set at a minimum pressure. The minimum pressure is 0Mpa, for example. As a result, the forward clutch 41 is maintained in a disengaged state.

In a step S32, the oil pressure supplied to the forward clutch 41 is controlled to the clutch oil pressure command value P_target set in the control described above by the clutch pressure adjustment device 30.

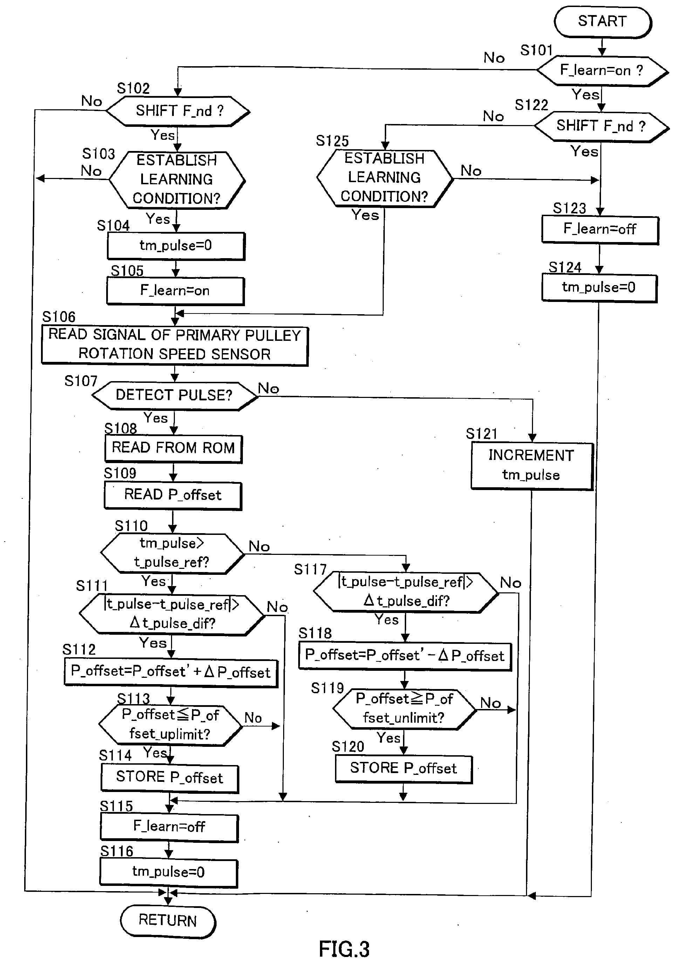

Next, a method of setting the learned correction amount P_offset will be described using the flowchart shown in FIG. 3. This setting method is performed in parallel with the flowchart shown in FIG. 2.

In a step S 101, a determination is made as to whether or not a learning-in-progress flag F_learn is on. When the learning-in-progress flag F_learn is off, the routine advances to a step S102, and when the learning-in-progress flag F_learn is on, the routine advances to a step S 122. In the first determination following the start of the control, the learning-in-progress flag F_learn is off, and therefore the routine advances to the step S102.

In the step S102, a determination is made as to whether or not the ND switch flag F_nd has shifted from off to on. This determination is made by determining whether or not the ND switch flag F_nd is on in the step S4 of the flowchart shown in FIG. 2 after determining that the shift lever 17 has switched from the N range to the D range in the step S3. When the ND switch flag F_nd has shifted from off to on, the routine advances to a step S103, and when the ND switch flag F_nd remains in the off state or the on state, the current control is terminated.

In the step S103, a determination is made as to whether or not a learning condition has been satisfied. The learning condition is satisfied when the oil temperature is higher than a predetermined oil temperature and the vehicle is stationary. When the learning condition is satisfied, the routine advances to a step S 104, and when the learning condition is not satisfied, the current control is terminated.

When the oil temperature falls, the viscosity of the working oil increases, leading to a reduction in fluidity, and as a result, an actual clutch oil pressure, which is the pressure actually supplied to the forward clutch 41, increases at a delay relative to variation (increase) in the clutch oil pressure command value P_target. In this case, if learning is performed and the clutch oil pressure command value P_target (initial engagement pressure P_start) is corrected using the resulting learned correction amount P_offset, the actual clutch oil pressure increases early relative to variation in the clutch oil pressure command value P_target once the oil temperature has entered a normal use temperature region. As a result, rapid engagement of the forward clutch 41 occurs when the oil temperature reaches a normal use oil temperature. Hence, when the oil temperature is lower than the predetermined oil temperature, learning is not performed.

Further, the vehicle is determined to be stationary when the primary pulley 10 is in a state of non-rotation, for example when the vehicle speed is Okm/h and a brake switch is on.

In the step S104, a learning timer tm_pulse is initialized to zero to begin learning of the learned correction amount P_offset.

It should be noted that in the step S104, the learning timer tm_pulse may be calculated using the first timer, second timer and third timer employed in FIG. 2.

In a step S105, the learning-in-progress flag F_learn is switched on.

In a step S 106, a signal from the primary pulley rotation speed sensor 23 is read.

In a step S107, a determination is made as to whether or not the primary pulley rotation speed sensor 23 has output a pulse signal. When a pulse signal has been output, the current learning timer (elapsed time) tm_pulse is calculated, whereupon the routine advances to a step S108. When a pulse signal has not been output, the routine advances to a step S121.

When the shift lever 17 is in the N range and the vehicle is stationary, the primary pulley 10 does not rotate and the primary pulley rotation speed sensor 23 does not output a pulse signal. However, when the shift lever 17 shifts from the N range to the D range, torque from the engine 1 is transmitted gradually, whereby the primary pulley 10 rotates. In this case, the primary pulley rotation speed sensor 23 outputs a pulse signal.

In the step S108, (nominal values of) a reference time t_pulse_ref and a reference correction amount ΔP_offset are read from the ROM of the control unit 20. The reference time t_pulse_ref is a time extending from a point at which the ND switch flag F_nd switches from off to on to a point at which the primary pulley rotation speed sensor 23 outputs a pulse signal when temporal deterioration or the like has not occurred in the forward clutch 41 and so on. The reference correction amount ΔP_offset is a preset value by which the learned correction amount P_offset is corrected in a single learning correction operation when an absolute value of a deviation between the learning timer tm_pulse and the reference time t_pulse_ref is large.

In a step S109, the learned correction amount P_offset is read from the storage area of the control unit 20 (hereafter, the learned correction amount P_offset read in the step S109 will be referred to as P_offset'). When the learned correction amount P_offset is not stored in the storage area, the learned correction amount P_offset' is set at zero.

In a step S110, the learning timer tm_pulse at the time of pulse signal output from the primary pulley rotation speed sensor 23 is compared with the reference time t_pulse_ref. When the learning timer tm_pulse is larger than the reference time t_pulse_ref, the routine advances to a step S111, and when the learning timer tm_pulse is smaller than the reference time t_pulse_ref, the routine advances to a step S 117.

When the learning timer tm_pulse at the time of pulse signal output from the primary pulley rotation speed sensor 23 is larger than the reference time t_pulse_ref, the actual clutch oil pressure decreases relative to the nominal value of the clutch oil pressure command value P_target corrected by the currently stored learned correction amount P_offset. In other words, engagement of the forward clutch 41 becomes is delayed. Further, when the learning timer tm_pulse is smaller than the reference time t_pulse_ref, the actual clutch oil pressure increases relative to the nominal value of the corrected clutch oil pressure command value P_target. In other words, engagement of the forward clutch 41 is performed earlier.

In the step S111, a determination is made as to whether or not the absolute value of the deviation between the learning timer tm_pulse and the reference time t_pulse_ref is greater than a predetermined threshold Δt_pulse_dif. When the absolute value is greater than the predetermined threshold Δt_pulse_dif, the routine advances to a step S 112, and when the absolute value is smaller than the predetermined threshold Δt_pulse_dif, the routine advances to a step S 115.

When the absolute value of the deviation between the learning timer tm_pulse and the reference time t_pulse_ref is smaller than the threshold Δt_pulse_dif, the routine advances to the step S115, in which the current learned correction amount P_offset is maintained. Thus, modification of the learned correction amount P_offset due to a detection error or the like can be prevented. Also, hunting in the learned correction amount P_offset, or in other words hunting in the engagement timing of the forward clutch 41, can be prevented. The predetermined threshold Δt_pulse_dif is set at a value for preventing the effects of detection errors and preventing hunting in the learned correction amount P_offset.

It should be noted that in the step S110, the learning timer tm_pulse is determined to be larger than the reference time t_pulse_ref, and therefore, when the deviation between the learning timer tm_pulse and the reference time t_pulse_ref is calculated, the value of the deviation takes a positive sign. Hence, in the step S111, the threshold Δt_pulse_dif may be set at a positive value without calculating the absolute value of the deviation, and then compared thereto.

In the step S 112, the reference correction amount ΔP_offset is added to the learned correction amount P_offset' read in the step S109, and the result is updated to the learned correction amount P_offset. When the absolute value of the deviation between the learning timer tm_pulse and the reference time t_pulse_ref is larger than the predetermined threshold Δt_pulse_dif, the current learned correction amount P_offset' is updated, thereby preventing a delay in engagement of the forward clutch 41.

In a step S 113, a determination is made as to whether or not the learned correction amount P_offset updated in the step S 112 is equal to or smaller than a correction amount upper limit value P_offset_uplimit. When the learned correction amount P_offset is equal to or smaller than the correction amount upper limit value P_offset_uplimit, the routine advances to a step S114, and when the learned correction amount P_offset is larger than the correction amount upper limit value P_offset_uplimit, the routine advances to the step S115. When the learned correction amount P_offset is larger than the correction amount upper limit value P_offset_uplimit, the updated learned correction amount P_offset is not stored in the storage area of the control unit 20.

In the step S 114, the updated learned correction amount P_offset is stored in the storage area of the control unit 20. Thereafter, the value stored in the storage area of the control unit 20 is used as the learned correction amount P_offset.

In the step S115, the learning-in-progress flag F_learn is switched off. As a result, the learning control is terminated.

In a step S 116, the learning timer tm_pulse is initialized to zero.

When the learning timer tm_pulse is determined to be smaller than the reference time t_pulse_ref in the step S110, a determination is made in a step S 117 as to whether or not the absolute value of the deviation between the learning timer tm_pulse and the reference time t_pulse_ref is greater than the predetermined threshold Δt_pulse_dif. When the absolute value is greater than the predetermined threshold Δt_pulse_dif, the routine advances to a step S 118, and when the absolute value is smaller than predetermined threshold Δt_pulse_dif, the routine advances to the step S 115.

It should be noted that in the step S110, the learning timer tm_pulse is determined to be smaller than the reference time t_pulse_ref, and therefore, when the deviation between the learning timer tm_pulse and the reference time t_pulse_ref is calculated, the value of the deviation takes a negative sign. Hence, in the step S117, the threshold Δt_pulse_dif may be set at a negative value without calculating the absolute value of the deviation, and then compared thereto. At this time, when the threshold Δt_pulse_dif is set at a negative value and the deviation is larger than the threshold in a negative direction, the routine advances to the step S 118. In this case, the threshold of the step S111 and the threshold of the step S 117 may take different values or values that differ only in their sign.

In the step S118, the reference correction amount ΔP_offset is subtracted from the learned correction amount P_offset' read in the step S109, and the result is updated to the learned correction amount P_offset. When the absolute value of the deviation between the learning timer tm_pulse and the reference time t_pulse_ref is smaller than the predetermined threshold Δt_pulse_dif, the current learned correction amount P_offset' is updated, thereby preventing rapid engagement of the forward clutch 41.

In a step S 119, a determination is made as to whether or not the learned correction amount P_offset updated in the step S 118 is equal to or greater than a correction amount lower limit value P_offset_unlimit. When the learned correction amount P_offset is equal to or greater than the correction amount lower limit value P_offset_unlimit, the routine advances to a step S120, and when the learned correction amount P_offset is smaller than the correction amount lower limit value P_offset_unlimit, the routine advances to the step S 115. When the learned correction amount P_offset is smaller than the correction amount lower limit value P_offset_unlimit, the updated learned correction amount P_offset is not stored in the storage area of the control unit 20.

The learned correction amount P_offset is a numerical value having a sign, and therefore the correction amount lower limit value P_offset_unlimit is a negative-side limit value. Therefore, when the correction amount upper limit value P_offset_uplimit and the correction amount lower limit value P_offset_unlimit are set at an identical value, the absolute value of the learned correction amount P_offset is compared to the absolute value of the correction amount lower limit value P_offset_unlimit in the step S 119, and when the absolute value of the learned correction amount P_offset is smaller than the absolute value of the correction amount lower limit value P_offset_unlimit, the routine advances to the step S120.

In the step S120, the updated learned correction amount P_offset is stored in the storage area of the control unit 20. Thereafter, the value stored in the storage area of the control unit 20 is used as the learned correction amount P_offset.

When a pulse signal has not been output from the primary pulley rotation speed sensor 23 in the step S107, the learning timer tm_pulse is incremented in the step S 121.

When the learning-in-progress flag F_learn is determined to be on in the step S101, a determination is made in the step S122 as to whether or not the ND switch flag F_nd has switched from on to off. When the ND switch flag F_nd has switched from on to off, the routine advances to a step S123, and when the ND switch flag F_nd has not switched from on to off, the routine advances to a step S125.

In the step S123, the learning-in-progress flag F_learn is switched off. Thus, learning of the learned correction amount P_offset is halted and the learning processing is terminated in cases such as when a switch from the N range to the D range is halted after learning has begun.

In a step S124, the learning timer tm_pulse is initialized to zero.

When no variation is determined in the ND switch flag F_nd in the step S122, a determination is made in the step S125 as to whether or not the learning condition is established. The learning condition is identical to that of the step S103. When the learning condition is established, the routine advances to the step S106, in which learning is continued, and when the learning condition is not established, the routine advances to the step S123.

With the control described above, when the shift lever 17 is shifted from the N range to the D range and the learning condition is established, the learning timer tm_pulse up to the point at which a pulse signal is output from the primary pulley rotation speed sensor 23 is calculated. The learned correction amount P_offset is then calculated on the basis of the calculated learning timer tm_pulse and stored in the storage area of the control unit 20. The clutch oil pressure command value P_target is then calculated on the basis of the stored learned correction amount P_offset, and by controlling the oil pressure, engagement delays and engagement shock due to rapid engagement can be prevented in the forward clutch 41.

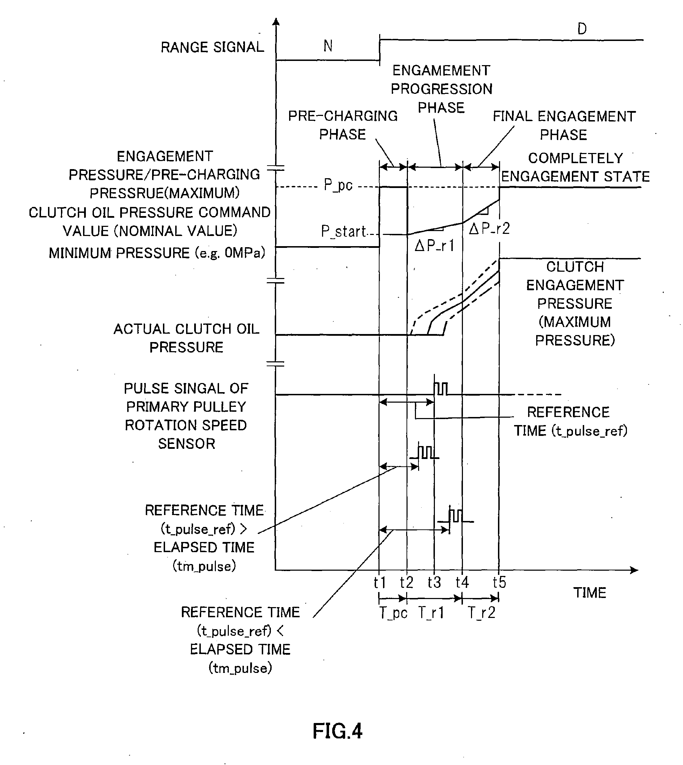

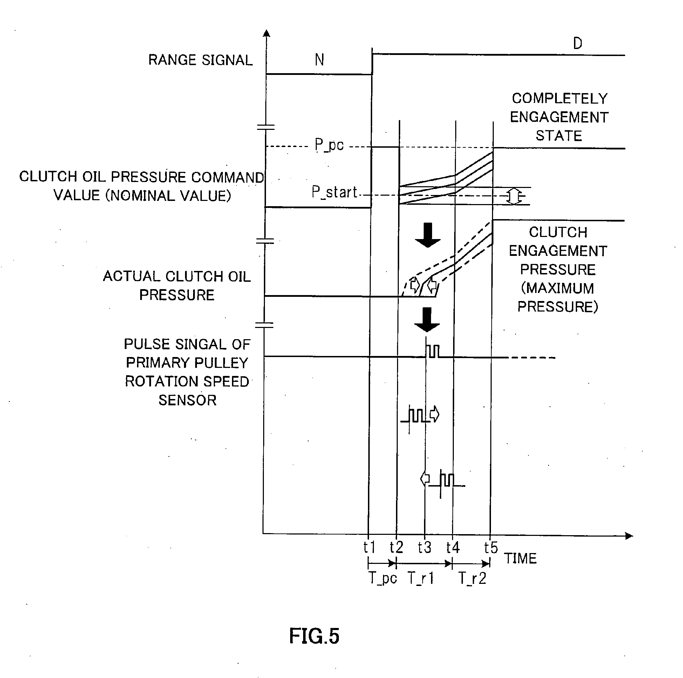

Next, variation in the actual clutch oil pressure according to this invention will be described using the time charts shown in FIGs. 4 and 5. FIG. 4 is a time chart showing variation in the actual clutch oil pressure when this invention is not used, and FIG. 5 is a time chart showing variation in the actual clutch oil pressure when this invention is used.

In cases, a sensor for detecting the turbine rotation speed is not provided, and this invention is not used, when the shift lever 17 is shifted from the N range to the D range at a time t1, the pre-charging phase begins. Accordingly, the clutch oil pressure command value P_target is set at the pre-charging pressure P_pc to reduce the inactive stroke part of the forward clutch 41.

When the first timer tm_1 reaches the pre-charging time T_pc at a time t2, the engagement progression phase begins. Accordingly, the clutch oil pressure command value P_target is set at the nominal value and increased from the nominal value at the first ramp increase rate ΔP_r1.

At a time t4, the second timer tm_2 reaches the first ramp time T_r1 such that the final engagement phase begins, and at a time t5, the third timer tm_3 reaches the second ramp time T_r2, at which point the forward clutch 41 is completely engaged.

If the actual clutch oil pressure deviates from the nominal value to a high side at this time (shown by a broken line in FIG. 4), and the learned correction amount P_offset cannot be learned, the oil pressure is high during clutch engagement at the time t5, and as a result, engagement shock may occur. Further, when the actual clutch oil pressure deviates to the low side of the nominal value (shown by a dot-dash line in FIG. 4), the oil pressure is low during clutch engagement at the time t5, and as a result, engagement of the forward clutch 41 may be delayed.

In this case, focusing on the output of a pulse signal from the primary pulley rotation speed sensor 23, when the actual clutch oil pressure deviates to the high side of the nominal value, the elapsed time at the point of pulse signal output is smaller (shorter) than the reference time t_pulse_ref. When the actual clutch oil pressure deviates to the low side, on the other hand, the time at the point of pulse signal output is larger (longer) than the reference time t_pulse_ref.

Hence, in this embodiment, the time at which a pulse signal is output by the primary pulley rotation speed sensor 23 is calculated as the learning timer tm_pulse, and the learned correction amount P_offset is learned on the basis of the learning timer tm_pulse. As a result, the learned correction amount P_offset can be learned even when a turbine rotation speed sensor is not used.

Therefore, as shown in FIG. 5, in cases where the actual clutch oil pressure deviates to the high side and the low side of the nominal value, the clutch oil pressure command value P_target is reduced or increased at the time t2, i.e. at the start of the engagement progression phase, and as a result, variation in the actual clutch oil pressure can be made substantially identical to variation in the nominal value. It should be noted that the time at which the primary pulley rotation speed sensor 23 outputs a pulse signal thereafter is the time t3. Further, when the learning timer tm_pulse deviates from the reference time t_pulse_ref again, the learned correction amount P_offset is learned again, and therefore the learned correction amount P_offset can be updated appropriately.

In this embodiment, a case in which the shift lever 17 is shifted from the N range to the D range was described, but the control described above can also be performed when the shift lever 17 shifts from the N range to the R range. The control described above can also be performed when an L range, an S range, a 2-range, and so on are provided.

The effects of the first embodiment of this invention will now be described.

In this embodiment, when the shift lever 17 shifts from the N range to the D range and a predetermined learning condition is established, the elapsed time up to the point at which a pulse signal is output by the primary pulley rotation speed sensor 23 is calculated as the learning timer tm_pulse, and the learned correction amount P_offset, which is an oil pressure correction amount to be used during clutch engagement, is updated on the basis of the learning timer tm_pulse. Hence, the learned correction amount P_offset can be updated even when a turbine rotation speed sensor is not used, and as a result, clutch engagement delays and engagement shock caused by temporal variation, product variation, the working oil temperature, and so on can be suppressed. Moreover, the number of components can be reduced, enabling a reduction in cost.

Further, a new learned correction amount P_offset is calculated by adding the reference correction amount ΔP_offset to the current learned correction amount P_offset' when the learning timer tm_pulse is longer than the reference time t_pulse_ref and subtracting the reference correction amount ΔP_offset from the current learned correction amount P_offset when the learning timer tm_pulse is shorter than the reference time t_pulse_ref. Thus, the learned correction amount P_offset can be calculated easily.

Next, a second embodiment of this invention will be described.

In this embodiment, a part of the method of setting the learned correction amount P_offset differs from that of the first embodiment, but all other constitutions and control are identical to the first embodiment, and therefore description thereof has been omitted.

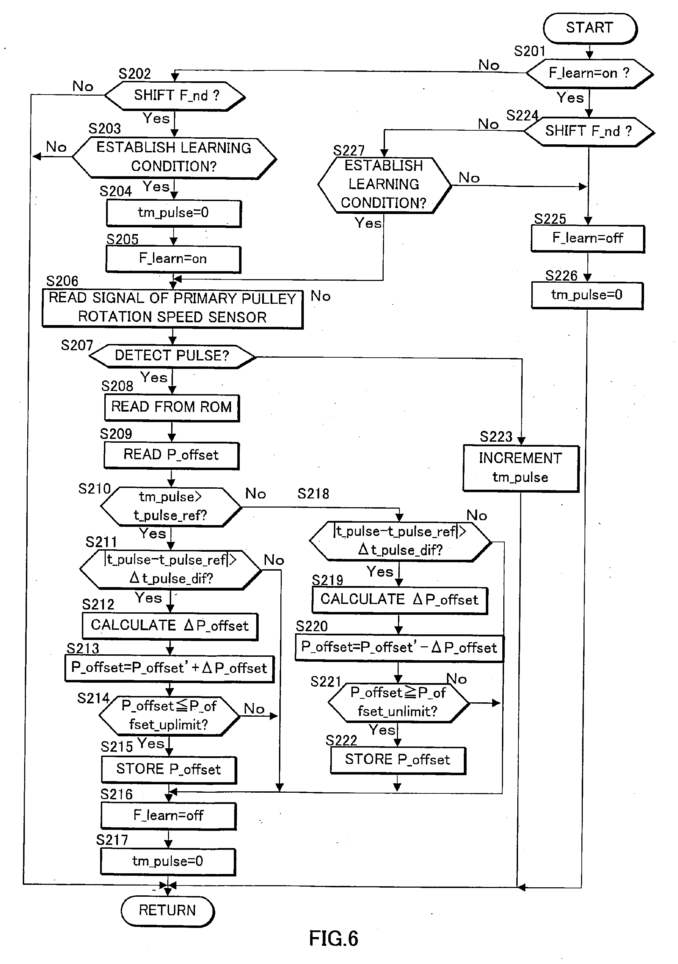

The method of setting the learned correction amount P_offset according to this embodiment will be described using the flowchart shown in FIG. 6.

Control performed from a step S201 to a step S207 is identical to the control of the steps S101 to S107 in FIG. 3, and therefore description thereof has been omitted.

In a step S208, the reference time t_pulse_ref is read from the ROM of the control unit 20.

Control performed from a step S209 to a step S211 is identical to the control of the steps S109 to S111 in FIG. 3, and therefore description thereof has been omitted.

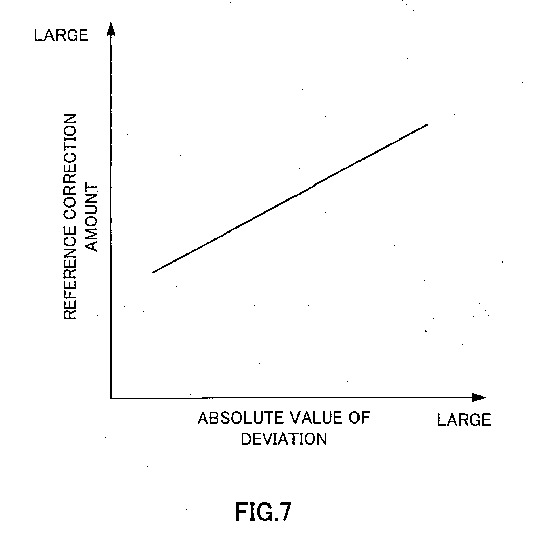

In a step S212, the reference correction amount ΔP_offset is calculated on the basis of the absolute value of the deviation between the learning timer tm_pulse and the reference time t_pulse_ref from a map shown in FIG. 7. The reference correction amount ΔP_offset increases as the absolute value of the deviation between the learning timer tm_pulse and the reference time t_pulse_ref increases.

Control performed from a step S213 to a step S218 is identical to the control of the steps S112 to S117 in FIG. 3, and therefore description thereof has been omitted. In a step S213, the reference correction amount ΔP_offset calculated in the step S212 is used.

In a step S219, similarly to the step S212, the reference correction amount ΔP_offset is calculated from the map shown in FIG. 7.

Control performed from a step S220 to a step S227 is identical to the control of the steps S118 to S125 in FIG. 3, and therefore description thereof has been omitted.

Effects of the second embodiment of this invention will now be described.

In this embodiment, the reference correction amount ΔP_offset is calculated on the basis of the absolute value of the deviation between the learning timer tm_pulse and the reference time t_pulse_ref, and therefore the learned correction amount P_offset can be calculated accurately.

This application claims priority from Japanese Patent Application 2008-68117, filed March 17, 2008, which is incorporated herein by reference in its entirety.

## Claims

1. A control device for a continuously variable transmission, which controls a continuously variable transmission having a belt (12) that is looped around a primary pulley (10) and a secondary pulley (11) and has a contact radius with the pulleys (10, 11) which varies in accordance with a groove width, comprising:
an inhibitor switch (22) which outputs a signal corresponding to a shift lever operating position;
an oil pressure control means (30) which controls an oil pressure supplied to a forward clutch (41) or a reverse clutch (42) interposed between the primary pulley (10) and an engine (1) on the basis of the signal output by the inhibitor switch (22) and an operating condition of a vehicle;
a primary pulley rotation speed detection means (23) which detects a rotation speed of the primary pulley (10);
a time calculation means which, when the shift lever operating position is determined to have been switched from a non-travel position to a travel position on the basis of the signal output by the inhibitor switch (22), calculates an elapsed time from the determination to output of a pulse signal by the primary pulley rotation speed detection means (23);
an oil pressure correction amount learning means which, when the shift lever operating position is determined to have been switched from the non-travel position to the travel position on the basis of the signal output by the inhibitor switch (22), learns an oil pressure correction amount on the basis of the elapsed time; and
an oil pressure correction means which, when the shift lever operating position is switched from the non-travel position to the travel position, corrects the oil pressure supplied to the forward clutch (41) or the reverse clutch (42) through open control by the oil pressure correction amount,
wherein the oil pressure control means (30) supplies the oil pressure corrected by the oil pressure correction means to the forward clutch (41) or the reverse clutch (42) when the shift lever operating position is switched from the non-travel position to the travel position.

2. The control device for a continuously variable transmission as defined in Claim 1, wherein the oil pressure correction amount learning means learns the oil pressure correction amount after increasing the oil pressure correction amount by a predetermined amount when the elapsed time is longer than a reference time, and learns the oil pressure correction amount after reducing the oil pressure correction amount by a predetermined amount when the elapsed time is shorter than the reference time.

3. The control device for a continuously variable transmission as defined in Claim 1, wherein the oil pressure correction amount learning means calculates the oil pressure correction amount on the basis of a deviation between the elapsed time and the reference time.

4. A control method for a continuously variable transmission, which controls a continuously variable transmission having a belt (12) that is looped around a primary pulley (10) and a secondary pulley (11) and has a contact radius with the pulleys (10, 11) which varies in accordance with a groove width, comprising:
controlling an oil pressure supplied to a forward clutch (41) or a reverse clutch (42) interposed between the primary pulley (10) and an engine (1) on the basis of a signal output by an inhibitor switch and an operating condition of a vehicle;
calculating an elapsed time from a switch of a shift lever (17) to output of a pulse signal by a primary pulley rotation speed detection unit (23) when the shift lever operating position is determined to have been switched from a non-travel position to a travel position on the basis of the signal output by a inhibitor switch (22),
learning an oil pressure correction amount on the basis of the elapsed time when the shift lever operating position is determined to have been switched from the non-travel position to the travel position on the basis of the signal output by the inhibitor switch (22); and
correcting the oil pressure supplied to the forward clutch or the reverse clutch through open control by the oil pressure correction amount when the shift lever operating position is switched from the non-travel position to the travel position,
wherein the corrected oil pressure is supplied to the forward clutch (41) or the reverse clutch (42) when the shift lever operating position is switched from the non-travel position to the travel position.

5. The control method for a continuously variable transmission as defined in Claim 4, wherein the oil pressure correction amount is learned by increasing a predetermined amount when the elapsed time is longer than a reference time, and is learned by reducing a predetermined amount when the elapsed time is shorter than the reference time.

6. The control method for a continuously variable transmission as defined in Claim 4, wherein the oil pressure correction amount is calculated on the basis of a deviation between the elapsed time and the reference time.
